# EUROPEAN PATENT APPLICATION

(11) **EP 1 215 838 A2**
(43) Date of publication of application: **19.06.2002**
(21) Application number: 01310235.5
(22) Date of filing: 07.12.2001
(51) Int. Cl.: H04L 1/20, H04L 1/00

(54) **Method and device for indicating the reception quality**

(30) Priority: 12.12.2000 GB 0030609
(71) Applicant: Pace Micro Technology Ltd, Saltaire, Shipley BD18 3LF (GB)
(72) Inventor: Coe, Peter W., Skipton, North Yorkshire BD23 2TE (GB)
(74) Representative: Wood, Graham

(57) **Abstract**

A method of indicating data quality provided to a digital data receiver. The digital data receiver is typically a broadcast data receiver or set top box receiving digital data from a remote location. The method employs a Forward Error Correction (FEC) method of turbo decoding of the received data, with received data being decoded and errors detected using one or more turbo code decoding stages. The method includes the steps of monitoring and/or measuring error output produced from each of the turbo code decoding stages to obtain an error value at each stage. The error value from each stage is used to calculate a bit error rate (BER) which in turn is used to indicate signal quality using BDR vs Eb/No relationship.

## Description

This invention relates to data decoding and the use of error output or calculated error values as a method of indicating received data/signal quality.

Digital communications links are used for the efficient and flexible transmission of a wide range of data applications. As demand for these data applications increases, the need for faster, efficient and more accurate transmission of digital data is required.

Conventional digital data receivers such as those currently used in satellite reception use a convolutional error correction method (Forward Error Correction (FEC)) known as Viterbi for the correction of errors in the received digital signal. The corrected error count produced by this method is used to indicate received digital signal quality. A high corrected error count indicates poor signal quality and a low corrected error count indicates good signal quality. Conventionally the measure of corrected error count is defined in terms of Bit Error Rate (BER), although Byte Error Rate is also used and a conversion to BER may be carried out in software or hardware. Signal quality can be defined as Energy per bit divided by Noise interference, Eb/No. It is possible to relate BER to Eb/No and this relationship is the subject of prior art and can be found in published standards such as ETSI 300 421. Conveniently, the rate of change in bit error rate (BER) versus Eb/No for the Viterbi FEC method can be related to normal signal quality variations in the environment of digital data reception and so can be usefully employed to indicate received signal quality.

A new FEC method known as Turbo Code decoding is becoming increasingly used in place of Viterbi due to its ability to reduce the BER for the same Eb/No in Viterbi. The turbo code decoding carries out more error correction than is possible using Viterbi. Turbo code decoding does this by successive cascading of error correction. The advantage of Turbo code decoding over Viterbi is therefore that the digital receiver is able to work at lower Eb/No or poorer signal quality levels. However, the disadvantage of using turbo code decoding is that the method of signal quality indication previously employed for Viterbi is no longer useful, as the BER (after the final stage of Turbo code decoding) changes too rapidly with Eb/No, and can no longer be usefully related to signal quality variations in the environment of digital data reception.

It is therefore an aim of the present invention to provide a method of useful indication of data/signal quality in digital data receivers using the turbo decoding FEC method.

According to a first aspect of the present invention there is provided a method of indicating data quality provided to a digital data receiver, said digital data receiver receiving digital data from a remote location, said method employing a Forward Error Correction (FEC) method of turbo decoding of the received data, with received data being decoded and errors detected using one or more turbo code decoding stages and characterised in that said method includes the steps of monitoring and/or measuring error output produced from each of the turbo code decoding stages to obtain an error value at each stage.

In one embodiment decoding and error correction of the received digital data is carried out in one or more Turbo code decoding stages, each stage is a deconvolution and one stage is either cascaded with the next or in the case of only one stage of deconvolution, the product code is successively fed back to the input of the Turbo code deconvolution stage for further error correction. In either case, the error count or output is measured/monitored after each deconvolution stage to obtain an error value.

Preferably the individual error value or values obtained after each deconvolution stage is/are used to indicate BER, and subsequently signal quality, using the BER vs Eb/No relationship for each deconvolution stage of the turbo code decoder used.

In an alternative embodiment the error count at each deconvolution stage is measured/monitored at pre-determined time intervals during decoding, thereby obtaining either the number of errors per time interval or, alternatively, the time taken to achieve a pre-determined error count.

In one embodiment the bit error count from each stage of the decoding simply indicates that one or more error(s) is/was present or error(s) are/were absent in the output of the deconvolution stage. This binary form of error count can be monitored and recorded (displayed or indicated) over time.

In an alternative embodiment the number of errors from the output of each deconvolution stage is measured and recorded (displayed or indicated).

In one embodiment the bit error count or value obtained after decoding of each stage is displayed on a display screen on the digital data receiver. In addition to, or alternatively, the bit error counts or values can be held in memory of the data receiver for the benefit of field installation, service fault diagnosis and/or the like.

In one embodiment, the bit error counts or values obtained at the outputs following the decoding of each stage can be displayed in the form of a bar graph. Signal quality can be displayed on the bar graph, for example, as poor (error output from stage 1), average (error output from stage 2) and good (error output from stage 3), each of these error outputs being first periodically reset in either time or count in order to obtain an error rate.

In an alternative embodiment, the bit error counts or values obtained at the outputs following the decoding of each deconvolution stage can be displayed in the form of a line graph.

In an alternative embodiment, the bit error counts or values are calculated from the turbo code decoders that only give Byte error outputs using a conventional transformation calculation.

According to a second aspect of the present invention there is there is provided a broadcast data receiver having means for indicating data quality, said broadcast data receiver (BDR) receiving digital data from a broadcaster at a remote location, said means including a forward error correction (FEC) method of turbo decoding of the received data, with received data being decoded and errors detected using one or more turbo code decoding stages and characterised in that said BDR monitors and/or measures error output produced from each of the turbo code decoding stages to obtain an error value at each stage.

The broadcast data receiver is typically in the form of a set top box connected to or forming part of a television display screen.

The advantage of the present invention is that by using error output following the decoding of each turbo code deconvolution stage to obtain an error value, a more gradual change in BER versus Eb/No is obtained and thus a more gradual change in signal quality is indicated. This gradual change is more usefully related to signal quality change in the environment, compared to the values obtained using the conventional method of final convolution stage error output.

An embodiment of the present invention will now be described with reference to the accompanying figures and the following description wherein:
Figure 1 is a schematic representation of a conventional turbo decoder function;
Figure 2 is a graphical representation of BER versus Eb/No (signal quality) for Viterbi and a conventional three stage Turbo code decoder;
Figure 3 is a schematic representation of a turbo decoder function according to an embodiment of the present invention;
Figure 4 is a graphical representation of BER versus Eb/No (signal quality) for Viterbi and the present invention.

An error correction method known as Viterbi has previously been employed for error correction of digital data in digital data receivers. The bit error count produced by this method on decoding is used to indicate digital signal quality using the relationship between BER and Eb/No (signal quality). The rate of change between BER and Eb/No (signal quality) can be conveniently related to normal signal quality variations in digital signal reception.

The problem associated with the use of turbo codes is that the gradual change in signal quality, that is BER versus Eb/No, in the Viterbi method is replaced by more rapid changes in signal quality, in the turbo decoding method. Thus the final error output values of the Turbo code decoder can no longer be usefully related to signal quality variations in digital data reception.

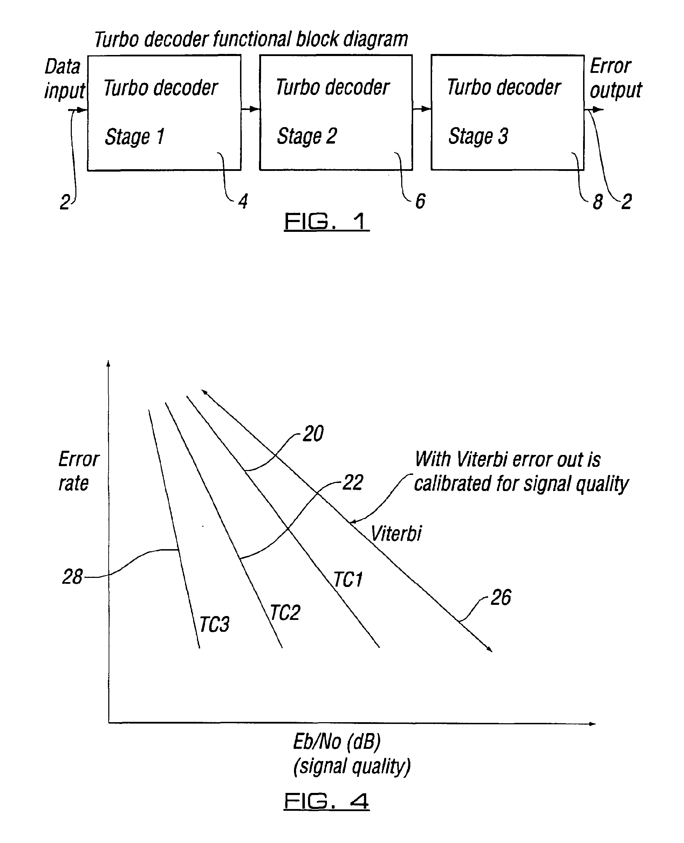

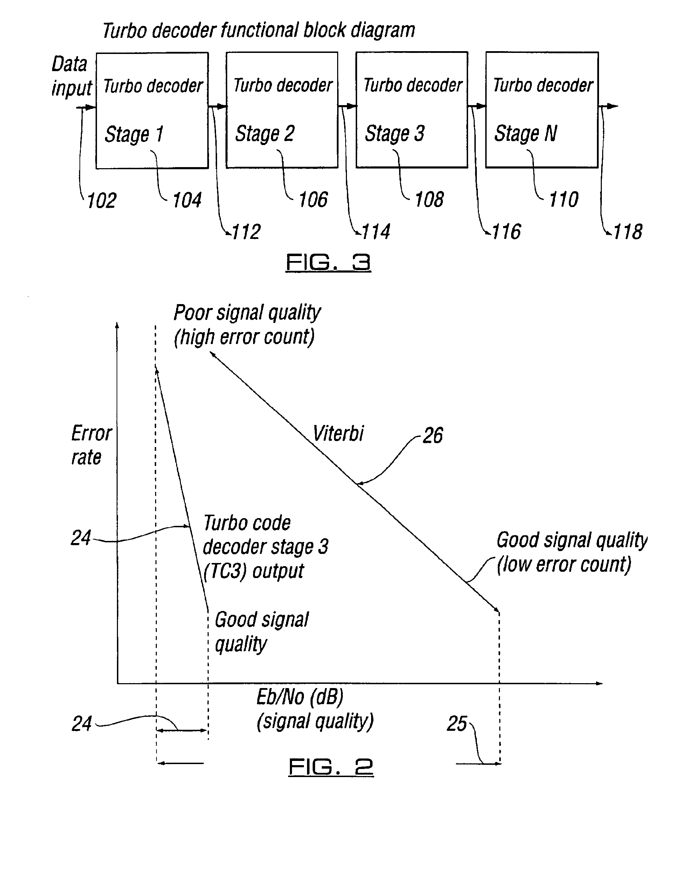

Figure 2 represents the rapid change (shown by the steep slope of the plot labelled 24) of signal quality (BER versus Eb/No) using the error output 21 from a conventional Turbo code method for a three stage turbo decoder, stages 4, 6 and 8 respectively as shown in Figure 1, compared to the more gradual change (plot labelled 26) using the Viterbi method. Arrow 23 shows the range used to indicate signal quality in the turbo code decoder method and arrow 25 shows the larger more useful range used to indicate signal quality in the Viterbi method.

Figure 4 represents the present invention. Here the rate of change in signal quality (BER versus Eb/No) that increases with each turbo decoder stage 104, 106 and 108 is available at the output of each stage 112, 114 and 116 respectively. It can be seen that the slopes of the error rate versus Eb/No plot labelled 20, 22 and 28, increases after each successive turbo decoder stage, thus reducing the dynamic signal quality range.

Specifically, a Turbo code data stream, shown by arrow 102 in figure 3, is decoded one stage at a time. Decoder stages are shown as 104, 106, 108 and 110 in Figure 1, with 110 representing "n" number of possible decoder stages. After each stage 104, 106, 108, 110 has decoded, an error output is produced 112, 114, 116 and 118 respectively.

The number of errors obtained for each decoder stage are then used to provide a visual display on the display screen of a digital data receiver in the form of a line graph. The line graph produced by the method of the present invention provides a gradual change in bit error rate versus Eb/No, thereby providing a more useful indication of signal quality.

In an alternative method, the presence or absence of error can be measured and recorded in a binary form. These measurements can be displayed in the form of a bar graph, each bar of the graph indicating a range of signal quality, i.e. three decoder stages would give three outputs with signal quality displayed as poor, average and good.

In order that the signal quality indicator is live and active, resetting of the bit error count can be performed at pre-determined time intervals using a "first in first out" (FIFO) method, whereby the error output is sampled at pre-determined time intervals and fed to a finite length memory buffer. The number of errors per unit of time held in the buffer is used to determine the error rate. In the FIFO method, each time a new error output sample is taken, all the previous samples are moved one place along the buffer and the "oldest" sample in the buffer is deleted. In this manner, the buffer length (number of samples taken over time in the memory) remains the same and the average error is continually updated.

An alternative method is to use the buffer to store error samples and at each pre-determined time interval the old samples in the buffer are deleted, new samples are loaded into the buffer and an average is then taken of the error output.

In a further example, the error count from each turbo code decoder stage is averaged to give an intermediate Eb/No indication from a single stage, thereby allowing smaller and thus finer steps of signal quality to be made available.

In the term Eb/No, No should not be thought of as only thermal noise but also as other signals that may cause interference, such as inter-modulation products produced by the receiver stages before decoding, or other environmental signals such as mobile telephones operating in the same frequency band is the receiver.

It is noted that the application of the signal quality method described above can be included in turbo code decoder integrated circuits as a circuit function which in turn outputs the signal quality or BER for each deconvolution stage either directly to one or more pins of the integrated circuit package or outputs BER via the input/output control data bus, examples of which would be the conventional I²C or three wire bus standards.

## Claims

1. A method of indicating data quality provided to a digital data receiver, said digital data receiver receiving digital data from a remote location, said method employing a Forward Error Correction (FEC) method of turbo decoding of the received data, with received data being decoded and errors detected using one or more turbo code decoding stages (104, 106, 108, 110) and **characterised in that** said method includes the steps of monitoring and/or measuring error output (112, 114, 116, 118) produced from each of the turbo code decoding stages to obtain an error value at each stage.

2. A method according to claim 1 **characterised in that** the error output (112, 114, 116, 118) is measured over each stage at pre-determined times and/or count intervals during decoding of the received digital data.

3. A method according to claim 1 **characterised in that** the error value obtained for each stage of turbo code decoding is used to indicate bit error rate (BER).

4. A method according to claim 3 **characterised in that** the BER is used to indicate signal quality using BER vs Eb/No relationship for each decoding stage.

5. A method according to claim 3 **characterised in that** the BER is the error output (112, 114, 116, 118) per pre-determined time interval.

6. A method according to claim 3 **characterised in that** the BER is the time taken to achieve a pre-determined error output (112, 114, 116, 118).

7. A method according to claim 1 **characterised in that** the presence or absence of error in the output (112, 114, 116, 118) of each decoding stage is measured and/or monitored to produce a binary form of error count or value.

8. A method according to claim 1 **characterised in that** the number of errors in the output (112, 114, 116, 118) of each decoding stage is measured and/or monitored to produce an error value for calculating BER.

9. A method according to claim 1 **characterised in that** the error value is displayed on a display screen on the digital data receiver.

10. A method according to claim 9 **characterised in that** the error value for decoding of each stage is displayed in the form of a bar graph.

11. A method according to claim 9 **characterised in that** the error value for decoding of each stage is displayed in the form of a line graph.

12. A method according to claim 1 **characterised in that** the error value is obtained using a transformation calculation on the error output.

13. A method according to claim 1 **characterised in that** the error value(s) and/or error outputs is/are stored in memory means of the data receiver.

14. A method according to claim 13 **characterised in that** resetting of error values or outputs in said memory means can be performed at pre-determined time intervals using a FIFO method, whereby the error value or output is sampled at pre-determined time intervals and fed to a finite length memory buffer, the error value or output per unit of time held in the buffer being used to determine error rate or an error value respectively.

15. A method according to claim 13 **characterised in that** at pre-determined time periods old error values or outputs stored in the memory means are deleted and the average of new error values or outputs stored in said memory means is/are used to calculate an error rate or an error value respectively.

16. A broadcast data receiver having means for indicating data quality, said broadcast data receiver (BDR) receiving digital data from a broadcaster at a remote location, said means including a forward error correction (FEC) method of turbo decoding of the received data, with received data being decoded and errors detected using one or more turbo code decoding stages (104, 106, 108, 110) and **characterised in that** said BDR monitors and/or measures error output (112, 114, 116, 118) produced from each of the turbo code decoding stages to obtain an error value at each stage.

17. A broadcast data receiver according to claim 16 **characterised in that** the error output (112, 114, 116, 118) is measured over each stage at pre-determined times and/or count intervals during decoding of the received digital data.

18. A broadcast data receiver according to claim 16 **characterised in that** the error value obtained for each stage of turbo code decoding is used to indicate bit error rate (BER).

19. A broadcast data receiver according to claim 18 **characterised in that** the BER is used to indicate signal quality using BER vs Eb/No relationship for each decoding stage.
